# EUROPÄISCHE PATENTSCHRIFT

(11) **EP 3 877 102 B1**
(45) Veröffentlichungstag und Bekanntmachung des Hinweises auf die Patenterteilung: **17.12.2025**
(21) Anmeldenummer: 20704840.6
(22) Anmeldetag: 10.02.2020
(51) Int. Cl.: B21D 22/16, B21D 51/10, B21D 51/16, B21D 53/84, B21H 1/18, B21H 7/00, B21K 1/22, B23P 15/00, F01L 3/14

(54) **VERFAHREN ZUR HERSTELLUNG EINES HOHLVENTILS FÜR VERBRENNUNGSMOTOREN**
METHOD FOR PRODUCING A HOLLOW VALVE FOR INTERNAL COMBUSTION ENGINES
PROCÉDÉ DE FABRICATION D'UNE SOUPAPE CREUSE POUR MOTEURS À COMBUSTION INTERNE

(30) Priorität: 12.03.2019 DE 102019106214
(43) Veröffentlichungstag der Anmeldung: 15.09.2021
(73) Patentinhaber: Federal-Mogul Valvetrain GmbH, 30890 Barsinghausen (DE)
(72) Erfinder: MATTHIAS, Thorsten, 30826 Garbsen (DE); WOLKING, Antonius, 30890 Barsinghausen (DE); KNUST, Johannes, 30449 Hannover (DE)
(74) Vertreter: Kurig, Thomas
(86) Internationale Anmeldenummer: PCT/EP2020/053348
(87) Internationale Veröffentlichungsnummer: WO 2020/182387

(56) Entgegenhaltungen:
- EP-A1- 2 811 126
- WO-A1-2019/001781
- WO-A1-2020/004286
- DE-A1- 102015 118 495
- GB-A- 461 940

## Beschreibung

### Gebiet der Erfindung

Die vorliegende Erfindung betrifft ein Verfahren zur Herstellung von Hohlventilen, bzw. Hohlraumventilen, für Verbrennungsmotoren und damit hergestellte Hohlventile.

### Stand der Technik

Ein- und Auslassventile sind bei Verbrennungsmotoren thermisch und mechanisch hoch beanspruchte Bauteile. Eine ausreichende Kühlung ist daher notwendig, um eine dauerhafte Funktionsfähigkeit der Ventile sicherzustellen. Hierbei sind Hohltellerventile gegenüber Vollschaftventilen und Hohlschaftventilen (d. h. ein Hohlventil bei dem lediglich im Schaft ein Hohlraum vorgesehen ist) vorteilhaft, da ein Hohlraum sowohl im Schaft als auch im Ventilkopf vorhanden ist, wodurch eine verbesserte interne Kühlung - mittels eines Kühlmediums, z. B. Natrium - erzielt werden kann. Weitere Vorteile sind ein geringeres Gewicht, die Vermeidung von Hot-Spots (im Verbrennungsmotor) und eine CO2-Reduzierung.

Hergestellt werden Hohlventile üblicherweise durch eine Kombination verschiedener Verfahren, wie z. B. Schmieden, Drehen und Schweißen. Hierbei ist insbesondere das Drehen oder Fräsen des Hohlraumes kostenintensiv. Auch sollten Schweißpunkte an der Tellerfläche oder an anderen betriebsbedingt kritischen Stellen vermieden werden. Ein weiterer Nachteil bekannter Verfahren ist, dass oftmals eine große Anzahl von Prozessschritten notwendig ist, wie z. B. in EP 2325446 A1. Zur kostengünstigen Herstellung großer Stückzahlen sind jedoch schnelle Umformprozesse vorteilhaft.

Beispielsweise beschreiben die EP 0898055 A1 und die US 006006713 A ein Hohltellerventil, das durch Schließen eines hohlen Rohlings mittels Schweißens (Reibschweißen, Laserschweißen) oder Panzerung hergestellt wird. Weitere Druckschriften, die sich mit der Herstellung von Hohlraumventilen befassen sind CN 104791040 A und JP 1995102917.

Bei dieser Fertigung treten aber aufgrund der hochlegierten Ventilstähle große Verschleißprobleme auf. Bei der Herstellung der Ventilvorform entsteht ein sehr hoher Verschleiß am Werkzeug, insbesondere dem Formstempel. Dies bedeutet eine kurze Standzeit und hohe Werkzeugkosten.

Bekannte Verfahren zur Herstellung von Hohlraumventilen mit nicht gleichmäßiger Schaftinnengeometrie sind in US 20090020082 durch die Verwendung von Einsätzen über die gebohrte Tellerfläche und in DE 102010051871 A1 durch die Erzeugung durch ein ECM-Verfahren gezeigt.

DE 102015118495 A1, die die Basis für den Oberbegriff des Anspruchs 1 bildet, offenbart ein Verfahren zur Herstellung eines Ventilkörpers eines Hohlventils.

Eine Aufgabe der vorliegenden Erfindung ist es also ein Herstellungsverfahren für Hohlventile bzw. für einen Ventilkörper für Hohlventile bereitzustellen, welches die genannten Nachteile nicht aufweist und gleichzeitig eine hohe Produktivität, gute Materialausnutzung und schnelle Umformprozesse aufweist.

Eine weitere Aufgabe der vorliegenden Erfindung ist es, das Herstellungsverfahren so zu adaptieren, dass der Verschleiß am Werkzeug verringert wird.

### Zusammenfassung der Erfindung

Erfindungsgemäß wird das Problem gelöst durch ein Verfahren zur Herstellung eines Ventilkörpers eines Hohlventils gemäß den Merkmalen des angehängten Anspruchs 1.

Das Verfahren zur Herstellung eines Ventilkörpers eines Hohlventils umfasst die Schritte des Bereitstellens eines Werkstücks, d. h. Rohlings oder Halbzeugs und das Bohrungsdrücken des Werkstücks zum Erzeugen einer Vorform die einen Napf mit einer durch die Napfwand gebildeten Hohlform aufweist.

Gemäß einem Aspekt der vorliegenden Erfindung kann das Bohrungsdrücken durchgeführt werden, mittels eines Formstempels, der mit einer axialen Kraft gegen das Werkstück gedrückt wird und wenigstens drei Drückrollen, die mit einer radialen Kraft auf das Werkstück gedrückt werden.

Gemäß einem Aspekt der vorliegenden Erfindung kann die Vorform einen Ventilkopf/-teller und einen Ventilschaft mit, im Vergleich zum Ventilteller, reduzierten Schaftdurchmesser aufweisen.

Gemäß einem Aspekt der vorliegenden Erfindung können die wenigstens drei Drückrollen gegenüber dem Formstempel so angeordnet werden, dass ihre radiale Kraft zwischen der Spitze und einem dicksten Durchmesser angreift oder dazwischen.

Gemäß einem Aspekt der vorliegenden Erfindung kann das Werkstück in einer Werkstückhalterung an einer Spindel aufgenommen werden und um seine Längsachse rotieren und sich der Formstempel synchron zur Spindel drehen.

Gemäß einem Aspekt der vorliegenden Erfindung können die wenigstens drei Drückrollen und der Formstempel synchron eine axiale Bewegung ausführen.

Gemäß einem Aspekt der vorliegenden Erfindung kann das Verfahren als Kalt-, Halbwarm- oder Warmumformung ausgeführt werden.

Gemäß einem Aspekt der vorliegenden Erfindung kann der Querschnitt der Hohlform kreisrund sein oder ein Mitnehmerprofil wie Gleichdick, Ellipse, Polygon oder axialgerichtete Vielkeil- und Verzahnungsprofile aufweisen.

Erfindungsgemäß wird das Problem weiterhin gelöst durch Hohlventil, welches einen Ventilkörper umfasst, der unter Verwendung des vorstehenden Verfahrens hergestellt wurde.

### Kurze Beschreibung der Zeichnung

Im Folgenden werden beispielhafte Ausführungsformen der Erfindung unter Bezug auf die Figuren genauer beschrieben, wobei
Figuren 1a - 1f verschiedene Zwischenschritte der Herstellung eines Ventilkörpers eines Hohlventils (dargestellt in Fig. 1d bzw. Fig. 1f) aus einem Rohling (dargestellt in Fig. 1a); und
Figuren 2a, 2b, 2b einen Verfahrensschritt des Bohrungsdrückens in einer 3D-Ansicht zeigen.

Im Folgenden werden sowohl in der Beschreibung als auch in der Zeichnung gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht notwendigerweise die tatsächlichen Größenverhältnisse dar.

### Ausführliche Beschreibung der Erfindung

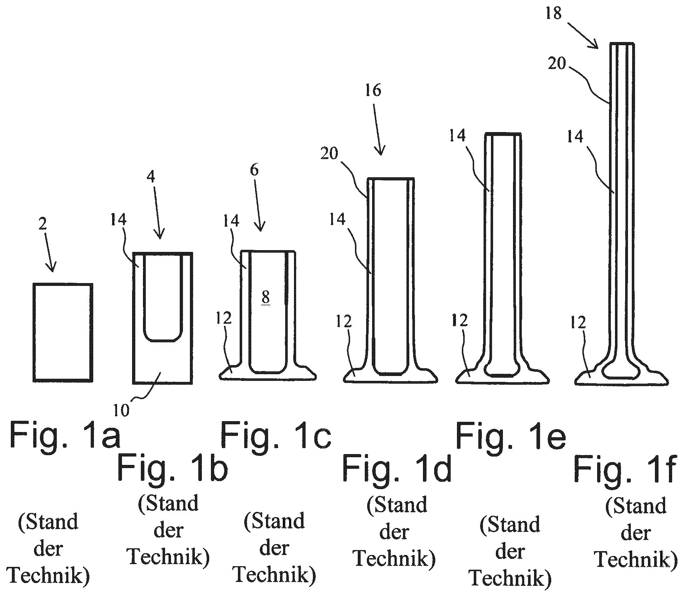

In den Figuren 1A bis 1F sind, in Schnittansichten, verschiedene Zwischenstufen des Herstellungsverfahrens dargestellt, wobei auch optionale bzw. bevorzugte Herstellungsschritte/Zwischenstufen dargestellt sind.

Bevorzugt dient als Ausgangspunkt, siehe Fig. 1a, ein Rohling 2 aus einem dem Fachmann bekannten Ventilstahl. Der Rohling weist eine zumindest teilweise zylindrische Form auf, bevorzugt eine kreiszylindrische Form, entsprechend der Kreisform des herzustellenden Ventilkörpers bzw. Ventils.

Der Rohling 2 wird in ein in Fig. 1b dargestelltes napfförmiges Halbzeug (bzw. Werkstück) 4 umgeformt. Das Halbzeug 4 in Form eines Napfes umfasst einen Bodenabschnitt 10, aus dem später ein Ventilkopf (bzw. Ventilteller) 12 gebildet wird, und eine rohrförmige Wand (bzw. ringförmige Wand) 14, die einen zylindrischen, bevorzugt kreiszylindrischen, Hohlraum 8 des napfförmigen Halbzeugs 4 umgibt und aus der später ein Ventilschaft 20 gebildet wird. Hierbei kann während der nachfolgenden Umformschritte eventuell Material zwischen Bodenabschnitt 10 und rohrförmiger Wand 14 fließen.

Stattdessen kann das napfförmige Halbzeug 4 direkt bereitgestellt werden; das Verfahren startet dann also mit Bereitstellen des in Fig. 1b dargestellten napfförmigen Halbzeugs 4.

In einem anschließenden Umformschritt wird aus dem Bodenabschnitt 10 der Ventilkopf 12 geformt. Eine dadurch erhaltene Vorform 6 des Ventilkörpers ist in Fig. 1c dargestellt.

Sowohl das Umformen des Rohlings 2 in ein napfförmiges Werkstück 4 als auch das Formen des Ventilkopfs 12 aus dem Bodenabschnitt 10 kann z. B. durch ein Warm- oder Kaltumformverfahren durchgeführt werden. Bevorzugt wird Fließpressen oder Schmieden verwendet. Beim Fließpressen wird ein Stempel in den Rohling 2 bzw. das Halbzeug 4 gepresst, um den Hohlraum 8 bzw. den Ventilkopf 12 zu formen, d. h. es handelt sich im Wesentlichen um (Napf-)Rückwärtsfließpressen bzw. Querfließpressen. Die Vorform 6 kann auch in einem einzigen Umformschritt, z. B. Schmieden oder Fließpressen, direkt aus dem Rohling 2 geformt werden.

Im nächsten Bearbeitungsschritt, von Fig. 1c nach Fig. 1d, wird eine axiale Länge der rohrförmigen Wand 14 vergrößert. ,Axial' bezieht sich hier auf die durch die rohrförmige Wand 14 (d. h. den späteren Schaft) definierte Richtung, also auf die (Mittel-)Achse der rohrförmigen Wand; ,radial' ist entsprechend eine Richtung orthogonal zur axialen Richtung. Eine Länge der rohrförmigen Wand 6 wird also in axialer Richtung gemessen.

Hierzu kann z. B. Drückwalzen bzw. Zylinderdrückwalzen über einem Drückwalzdorn 22 durchgeführt werden. Beim Drückwalzen rotiert die Vorform und es werden mindestens drei, durch Reibschluss mitrotierende, Drückrollen 24, 26 gegen die Außenseite der rohrförmigen Wand gedrückt und in axialer Richtung bewegt, so dass es zu einer plastischen Formänderung kommt. Die damit einhergehende inkrementelle Umformung führt zu einer vorteilhaften Kaltverfestigung des bearbeiteten Stahls. Insgesamt verringert sich die Wanddicke der rohrförmigen Wand während sich gleichzeitig die axiale Länge der rohrförmigen Wand vergrößert. Die mindestens drei Drückrollen werden gegebenenfalls mehrmals in axialer Richtung verfahren bis die gewünschte Längenzunahme bzw. Wanddickenverringerung erreicht ist. Dabei werden die radialen Abstände der mindestens drei Drückrollen von der Achse der rohrförmigen Wand bei aufeinanderfolgenden Durchgängen sukzessive verringert.

Das Drückwalzen führt also, aufgrund des eingesetzten Drückwalzdorns 22, im Wesentlichen zu einer Längung der rohrförmigen Wand 14, wobei deren Außendurchmesser ein wenig abnimmt (entsprechend der Abnahme der Wanddicke). Falls eine größere Abnahme des Außendurchmessers erwünscht ist, kann auch ein Drückwalzen, mit mehreren Drückrollen, ohne Drückwalzdorn erfolgen.

Falls Abmessungen der Vorform 6 und Parameter des Drückwalzens so gewählt sind, dass die durch das Drückwalzen erreichte Länge der rohrförmigen Wand 14, der durch das Drückwalzen erreichte Außendurchmesser und ein Innendurchmesser der rohrförmigen Wand 14 der Vorform (der einem Durchmesser des Drückwalzdorns entspricht) den gewünschten Abmessungen des herzustellenden Hohlventils entsprechen, kann auf diese Weise ein Ventilkörper 16 für ein Hohlschaftventil erhalten werden (vg1. Fig. 1d, wobei angemerkt sei, dass die in den Figuren gezeigten relativen Abmessungen nicht den tatsächlichen relativen Abmessungen entsprechen müssen, insbesondere ist in Fig. 1d der Durchmesser des Ventiltellers/-kopfes im Verhältnis zum Schaftdurchmesser kleiner als bei einem üblichen tatsächlichen Ventil dargestellt, ebenso ist der Schaftdurchmesser im Verhältnis zur Länge des Schaftes 20 größer als üblich dargestellt).

Abschließend (von Fig. 1d über Fig. 1e nach Fig. 1f) wird, optional, der Außendurchmesser der rohrförmigen Wand 14 reduziert, um einen fertiggestellten Ventilkörper 18 für ein Hohltellerventil zu erhalten, dessen Ventilschaft 20 einen vorbestimmten Außendurchmesser aufweist, d. h. einen gewünschten Zieldurchmesser aufweist; vgl. Fig. 1f. Dieser Umformschritt erfolgt bevorzugt ohne eingesetzten Dorn, damit der Durchmesser effektiv verkleinert werden kann. Dieser Schritt führt, neben einer Verringerung des Außendurchmessers, auch zu einer weiteren Längung der rohrförmigen Wand 14 und, falls ohne Dorn durchgeführt, zu einer Zunahme der Wanddicke der rohrförmigen Wand 14. Die Wanddicke wäre also gegebenenfalls im vorhergehenden Drückwalzschritt etwas kleiner einzustellen, um unter Berücksichtigung der Dickenzunahme im abschließenden Schritt eine bestimmte Wanddicke, und damit bei gegebenen Außendurchmesser D einen bestimmten Innendurchmesser, zu erhalten.

Um den Herstellungsprozess des Hohlventils abzuschließen, kann weiterhin ein Kühlmedium, z. B. Natrium, über das nach außen offene Ende des Ventilschaftes in den Hohlraum des Ventilkörpers eingefüllt werden und anschließend dieses Ende des Ventilschaftes verschlossen werden, z. B. durch ein Ventilschaftendstück, welches, etwa mittels Reibschweißen oder einem anderen Schweißverfahren, angebracht wird (in den Figuren nicht dargestellt).

Das Reduzieren des Außendurchmessers kann in mehreren Teilschritten erfolgen (ein Zwischenschritt ist beispielsweise in Fig. 1e dargestellt), wobei die einzelnen Teilschritte jeweils wahlweise mit oder ohne Dorn erfolgen können (zu Beginn eines Teilschritts kann der Durchmesser eines Dorns kleiner als der Durchmesser des Hohlraums sein); auch kann ein Durchmesser der Dorne in aufeinander folgenden Teilschritten verringert werden.

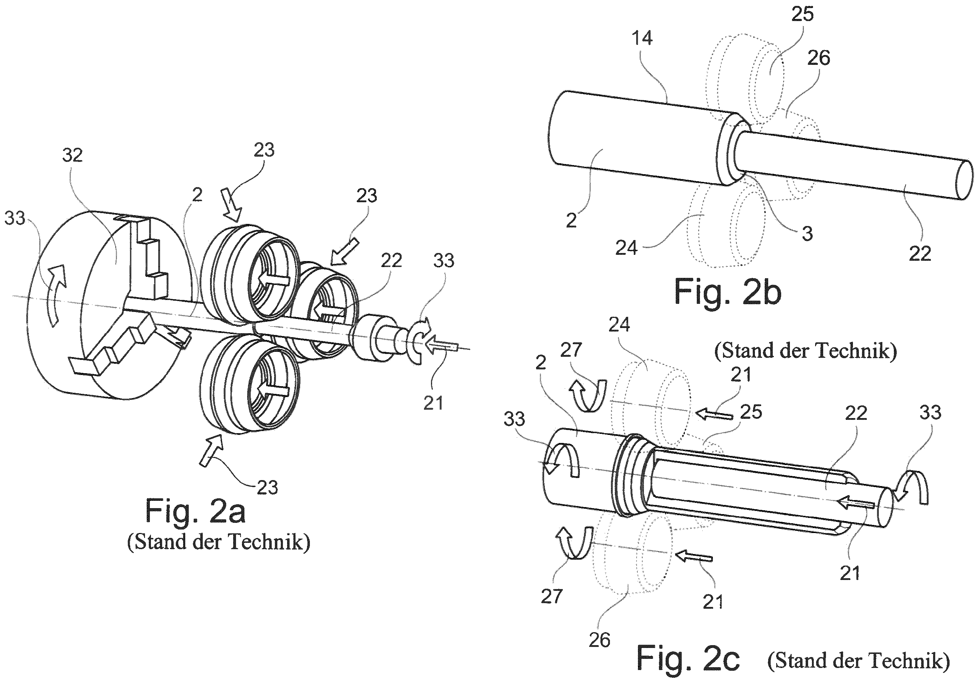

Fig. 2a, 2b und 2c stellen den Verfahrensschritt des Bohrungsdrückens, das zwischen Fig. 1a oder Fig. 1b und Fig. 1c stattfindet, in einer 3D-Ansicht dar.

In einem optionalen ersten Schritt wird in den Rohling 2 eine Kavität eingebracht, an der Stelle des Rohlings 2, an welcher der spätere Hohlraum 8 entstehen soll. Dies dient dazu den Formstempel 22 an den Rohling 2 anzulegen und zu zentrieren oder den folgenden Produktionsschritt zu vereinfachen. Somit entsteht ein Werkstück als Halbzeug 4 mit Kavität, wie in Fig. 1b dargestellt. Das Werkstück für das Bohrungsdrücken kann somit ein unbearbeiteter Rohling 2 oder ein Halbzeug 4 sein.

Das Werkstück 2, 4 wird wie in Fig. 2a gezeigt in eine Werkstückhalterung 32 eingesetzt und in einer Spindel einer Drehbank oder Drehautomaten eingespannt.

Der eigentliche Schritt des Bohrungsdrückens beginnt mit dem Ansetzen des Formstempels 22 (und der Drückrollen 24, 25, 26) zentrisch auf die Stirnseite 3 des Werkstücks 2, 4, wie in Fig. 2a und 2b (in Vergrößerung) dargestellt. Dabei kann direkt vom Stangenmaterial 2 ausgehend eine Vorform 6 in einem einzigen Prozessschritt gefertigt werden. Diese Vorform kann dann einen Ventilteller 12 und einen Ventilschaft 20 mit, im Vergleich zum Ventilteller reduziertem Schaftdurchmesser, aufweisen. Der Schaftdurchmesser dieser Vorform 6 kann größer sein, als der des fertigen Ventils.

Zur Herstellung der Vorform 6 versetzt die Spindel das Werkstück 2, 4 in Drehung 33 um seine Längsachse. Der Formstempel 22, welcher auch als Drückstempel oder Drückwalzdorn bezeichnet werden kann, kann dabei mit dem Werkstück 2, 4 mitrotieren, z. B. durch Reibschluss oder durch einen Antrieb. Alternativ kann der Formstempel 22 auch nicht rotieren, sondern sich lediglich axial bewegen. In letzterem Fall wäre eine hohe Wärmeentwicklung zu erwarten. Wenn die drei zueinander äquidistant angeordneten Drückrollen 24, 25, 26 (Gleichlaufdrückrollen) durch eine aufzubringende radiale Kraft 23 gegen die Seitenwand 14 des Werkstücks 2, 4 gedrückt werden, versetzen sich diese aufgrund von Reibschluss in Drehung 27 um ihre Achsen (nicht um die Drehachse der Spindel 33). Die Rotationsrichtung 33 des Werkstücks 2, 4, zusammen mit Werkstückhalterung 32 und (optional) Formstempel 22 und die Rotationsrichtung 27 der Drückrollen 24, 25, 26 sind in der Figur durch gekrümmte Pfeile angedeutet.

Die Anordnung aus Formstempel 22 und den Drückrollen 24, 25, 26 werden gleichförmig, synchron in axialer Richtung in Richtung der Spindel bewegt. Alternativ kann das Werkstück 2, 4 gegen die Werkzeuganordnung bewegt werden. Dadurch kommt es zu einer plastischen Verformung des Werkstücks 2, 4. Die Drückrollen und der axial wirkende Formstempel arbeiten gleichzeitig. Der Formstempel 22 dringt dabei zentrisch in das Werkstück ein und bildet eine rohrförmigen Wand 14 eines Napfes aus, mit einem Innendurchmesser, der dem Außendurchmesser des Formstempels 22 entspricht. Der äußere Durchmesser der rohrförmigen Wand 14 wird durch die Drückrollen 24, 25, 26 begrenzt. Zusätzlich führen diese gleichzeitig einen Schritt des Abstreckdrückens/-walzens durch. Das überschüssige, verdrängte Material des Werkstücks 2, 4 fließt ab, so dass die Länge der rohrförmigen Wand 14 in axialer Richtung zunimmt (Rückwärtsfließpressen eines Napfs - Napffließpressen. Die translatorische Bewegungsrichtung 21 des Formstempels 22 und der Drückrollen 24, 25 26 sind in der Figur durch Pfeile angedeutet. Die Fließrichtung des Materials der rohrförmigen Wand 14 ist entgegengesetzt.

Vorteilhafterweise werden durch das vorgestellte Verfahren des Bohrungsdrückens die Vorteile des Napffließpressens und Drückwalzens in einem Schritt kombiniert. Mit anderen Worten: Die Schritte des Fließpressens der Vorform 6 und des Abstreckens der Vorform 6 werden eingespart und stattdessen in einem Schritt des Bohrungsdrückprozesses vereint.

In den Figuren 2 sind beispielhaft drei Drückrollen 24, 25 26 dargestelltDrück. Werden mehrere Drückrollen verwendet, so sind diese bevorzugt regelmäßig über den Umfang verteilt; d. h. bei zwei Drückrollen beträgt der Winkel (in Umfangrichtung) zwischen den Drückrollen in etwa 180°, bei drei Drückrollen in etwa 120°, usw. Dadurch wird die Vorform 6 insbesondere auch in allen Richtungen abgestützt und Querkräfte auf das Werkstück 2, 4 vermieden.

In einer erfindungsgemäßen Anordnung (in den Figuren nicht dargestellt) bestehen zwischen den Drückrollen 24, 25, 26 ein radialer und ein axialer Versatz. Radialer Versatz bedeutet, dass der radiale Abstand der Drückrollen 24, 25, 26 von der Mittelachse unterschiedlich ist. Der axiale Versatz der Drückrollen 24, 25, 26 führt dazu, dass die dem Werkstück nähere Drückrolle 24 zuerst auf das Werkstück 2, 4 trifft und dieses bearbeitet, während weiter entfernt liegende Drückrollen 25, 26 später das Werkstück bearbeiten, sprich, die Stellen, die bereits durch die vorherige Drückrolle 24 bearbeitet wurde. So kann die Dicke der rohrförmigen Wand 14 stufenweise abgestreckt werden. Demzufolge muss die dem Werkstück am nächsten liegende Drückrolle 24 den größten radialen Abstand von der Mittelachse aufweisen, für den ersten Abstreckschritt, gefolgt derjenigen mit dem zweitgrößten radialen Abstand, usw. Auf diese Weise kann das Verfahren beschleunigt werden, da mehrere Radius- bzw. Wanddickenreduzierungsschritte in einem Durchgang erfolgen können.

Es können auch mehrere Sätze (nicht dargestellt) von Drückrollen angeordnet werden. Die Drückrollen eines jeden Satzes 24, 25, 26 sind dabei ohne Versatz angeordnet. Die Sätze sind in axialer Richtung beabstandet und jeder Satz bewirkt eine Teilabstreckung des Werkstücks 2, 4. Dadurch werden Quer- und Torsionskräfte auf das Werkstück im Vergleich zum Drückwalzen mit radialem/axialem Versatz verringert/vermieden und dennoch der Vorteil von stufenweisem Abstrecken und geringeren Fließkräften im Material des Werkstücks realisiert.

Das Bohrungsdrücken kann als Ergebnis ein Halbzeug 4 mit einem Napf, der einen Hohlraum 8 ausbildet, haben (siehe Fig. 1b). Jedoch kann während dieses Bearbeitungsschritts auch sogleich der Ventilkopf 12 hergestellt werden. Hierzu muss der Abstand der Drehachsen 27 der Drückrollen 24, 25, 26 von der Drehachse 33 des Werkstücks 2, 4 einstellbar sein, so dass während des axialen Verschiebens der Werkzeuganordnung die resultierende Dicke der rohrförmigen Wand 14 variabel ist und eine Kontur mit Ventilkopf 12 (wie in Fig. 1c gezeigt) hergestellt werden kann. Hierbei ist als Besonderheit zu beachten, dass der Ventilboden 10 entweder durch Abstechen des Werkstücks mit einem weiteren Werkzeug (Meißel) hergestellt wird oder ggf. durch eine knappe Einspannung des Werkstücks, so dass der Ventilboden 10 sich aus dem Boden des Werkstücks ergibt. Weiterhin ist zu beachten, dass sich der Formstempel 22 ggf. auf dem letzten Stück nicht mehr synchron mit den Drückrollen 24, 25, 26 bewegen sollte, um nicht einen durchgängigen Hohlraum 8 anstatt einem Sackloch zu erzeugen.

Vorteilhafterweise kann durch das Bohrungsdrücken eine hohe Produktivität, eine gute Materialausnutzung, ein geringer Zeitaufwand bei der Herstellung, ein kontinuierliches Umformverfahren erzielt werden. Werkstoffeinsparungen von bis zu 90% gegenüber dem Tiefbohren sind erreichbar. Gleichzeitig wird eine unerwünschte Schweißnaht an der Fläche des Ventiltellers 12 vermieden.

Verfahren der partiellen Massivumformung, wie das Bohrungsdrücken, zeichnen sich dadurch aus, dass der Werkstoff nicht im gesamten Umformvolumen, sondern in zeitlich und räumlich begrenzten Inkrementen plastifiziert wird. Im Vergleich zum Napf-Rückwärtsfließpressen ist aus diesem Grunde eine Verringerung der Stempelkraft möglich, während sogar etwa das vierfache Längen-Durchmesser-Verhältnis erreichbar ist.

Wegen des hohen hydrostatischen Druckanteils eignet sich das Verfahren insbesondere für hochfeste Werkstoffe. Beim Bohrungsdrücken werden formspeicherarme Werkzeuge verwendet.

### Bezugszeichenliste

- 2: Rohling, Stangenmaterial, Butzen
- 3: Stirnseite des Rohlings
- 4: (napfförmiges) Halbzeug
- 6: Vorform
- 8: Hohlraum
- 10: Bodenabschnitt
- 12: Ventilkopf / Ventilteller
- 14: rohrförmige Wand
- 16: fertiggestellter Ventilkörper für Hohlschaftventil
- 18: fertiggestellter Ventilkörper für Hohltellerventil
- 20: Ventilschaft
- 21: axiale Kraft
- 22: Drückwalzdorn, Formstempel, Drückstempel
- 23: radiale Kraft
- 24: Drückrolle
- 25: Drückrolle
- 26: Drückrolle
- 27: Drehrichtung der Drückrollen
- 32: Werkstückhalterung
- 33: Drehrichtung zur Bearbeitung
- 40: Pulver
- 41: Schutzschicht
- 42: Kühlschicht

## Patentansprüche

1. Verfahren zur Herstellung eines Ventilkörpers (16, 18) eines Hohlventils, umfassend die folgenden Schritte:
Bereitstellen eines Werkstücks (2, 4);
Bohrungsdrücken des Werkstücks (2, 4) zum Erzeugen einer Vorform (6) die einen Napf mit einer durch die Napfwand (14) gebildeten Hohlform (8) aufweist,
wobei der Schaftdurchmesser mittels Drückwalzen der Vorform (6) nach dem Bohrungsdrücken in einem weiteren Prozessschritt weiter reduziert wird,
**dadurch gekennzeichnet, dass**
beim Drückwalzen zwischen mindestens drei Drückrollen (24, 25, 26) ein radialer und ein axialer Versatz besteht, wobei der radiale Abstand der Drückrollen (24, 25, 26) von der Mittelachse unterschiedlich ist, wobei eine Drückrolle (24) mit einem größtem radialen Abstand von der Mittelachse das Werkstück zuerst bearbeitet wird, gefolgt von derjenigen mit einem zweitgrößtem radialen Abstand von der Mittelachse.

2. Verfahren gemäß Anspruch 1, **dadurch gekennzeichnet, dass**
das Bohrungsdrücken durchgeführt wird, mittels eines Formstempels (22), der mit einer axialen Kraft (21) gegen das Werkstück (2, 4) gedrückt wird und
den wenigstens drei Drückrollen (24, 25, 26), die mit einer radialen Kraft (23) auf das Werkstück (2, 4) gedrückt werden.

3. Verfahren gemäß Anspruch 1 oder 2, **dadurch gekennzeichnet, dass** die Vorform (6) einen Ventilkopf/-teller (12) und einen Ventilschaft (20) mit, im Vergleich zum Ventilteller, reduzierten Schaftdurchmesser aufweist.

4. Verfahren gemäß einem der Ansprüche 2 bis 3, **dadurch gekennzeichnet, dass** das Werkstück (2, 4) in einer Werkstückhalterung (32) an einer Spindel aufgenommen wird und um seine Längsachse rotiert und sich der Formstempel (22) synchron zur Spindel dreht.

5. Verfahren gemäß einem der Ansprüche 2 bis 4, **dadurch gekennzeichnet, dass** die wenigstens drei Drückrollen (24, 25, 26) und der Formstempel (22) synchron eine axiale Bewegung (21) ausführen.

6. Verfahren gemäß einem der vorigen Ansprüche, **dadurch gekennzeichnet, dass** das Verfahren als Kalt-, Halbwarm- oder Warmumformung ausgeführt wird.

7. Verfahren gemäß einem der vorigen Ansprüche, **dadurch gekennzeichnet, dass** der Querschnitt der Hohlform (8) kreisrund ist oder ein Mitnehmerprofil wie Ellipse, Polygon oder axialgerichtete Vielkeil- und Verzahnungsprofile aufweist.

8. Verfahren gemäß einem der vorigen Ansprüche, **dadurch gekennzeichnet, dass** nach dem Bohrungsdrücken in einem weiteren Prozessschritt das Formen des Ventilkopfes (12) durch Fließpressen oder Schmieden der Ventilkopf (12) erfolgt.

## Claims

1. A method for producing a valve body (16, 18) of a hollow valve, comprising the following steps:
providing a workpiece blank (2, 4);
spin extrusion of the workpiece (2, 4) to create a preform (6), which has a cup comprising a hollow mold (8) formed by the cup wall (14);
wherein the shaft diameter is further reduced in a further process step by means of flow forming of the preform (6) after the spin extrusion,
**characterized in that**
there is a radial and an axial offset between at least three flow forming rollers (24, 25, 26) during the flow forming, wherein the radial distance of the flow forming rollers (24, 25, 26) from the central axis is different, wherein a flow forming roller (24) having a largest radial distance from the central axis first machines the workpiece, followed by the one having a second-largest radial distance from the central axis.

2. The method according to claim 1, **characterized in that** the spin extrusion is carried out by means of a molding die (22), which is pushed against the workpiece (2, 4) with an axial force (21), and the at least three flow forming rollers (24, 25, 26), which are pushed onto the workpiece (2, 4) with a radial force (23).

3. The method according to claim 1 or 2, **characterized in that** the preform (6) has a valve head / plate (12) and a valve shaft (20) comprising a shaft diameter, which is reduced compared to the valve plate.

4. The method according to one of claims 2 to 3, **characterized in that** the workpiece (2, 4) is received in a workpiece holder (32) at a spindle and rotates around its longitudinal axis, and the molding die (22) rotates synchronously with the spindle.

5. The method according to one of claims 2 to 4, **characterized in that** the at least three flow forming rollers (24, 25, 26) and the molding die (22) synchronously carry out an axial movement (21).

6. The method according to one of the preceding claims, **characterized in that** the method is carried out as cold, warm, or hot forming.

7. The method according to one of the preceding claims, **characterized in that** the cross section of the hollow mold (8) is circular or has a follower profile, such as ellipse, polygon, or axially oriented multiple spline and toothing profiles.

8. The method according to one of the preceding claims, **characterized in that** the molding of the valve head (12) takes place by means of extrusion or forging of the valve head (12) after the spin extrusion in a further process step.

## Revendications

1. Procédé de fabrication d'un corps de soupape (16, 18) d'une soupape creuse, comprenant les étapes suivantes :
se mettre à disposition une pièce à travailler (2, 4) ;
exercer une pression de forage dans la pièce à travailler (2, 4) pour créer une préforme (6) qui présente une cupule avec une forme creuse (8) formée par la paroi (14) de la cupule,
le diamètre de la tige étant en outre, dans une autre étape du processus, réduit par laminage par pression de la préforme (6) après l'exercice de la pression de forage,
**caractérisé en ce que**,
lors du laminage par pression entre au moins trois rouleaux de pression (24, 25, 26), il existe un décalage radial et un décalage axial, la distance radiale des rouleaux de pression (24, 25, 26) étant différente de celle de l'axe central, le rouleau de pression (24) présentant la plus grande distance radiale par rapport à l'axe central traitant la pièce en premier, suivi de celui présentant la deuxième plus grande distance radiale par rapport à l'axe central.

2. Procédé selon la revendication 1, **caractérisé en ce que** l'exercice de la pression de forage est effectué au moyen d'un poinçon de formage (22), qui est pressé contre la pièce à travailler (2, 4) avec une force axiale (21), et desdits au moins trois rouleaux de pression (24, 25, 26) qui sont pressés contre la pièce à travailler (2, 4) avec une force radiale (23).

3. Procédé selon la revendication 1 ou la revendication 2, **caractérisé en ce que** la préforme (6) présente une tête/un disque de soupape (12) et une tige de soupape (20) dont le diamètre est réduit par rapport à celui du disque de soupape.

4. Procédé selon l'une des revendications 2 à 3, **caractérisé en ce que** la pièce à travailler (2, 4) est logée dans un support de pièce (32) sur une broche et tourne autour de son axe longitudinal, et **en ce que** le poinçon de formage (22) tourne de manière synchrone avec la broche.

5. Procédé selon l'une des revendications 2 à 4, **caractérisé en ce que** lesdits au moins trois rouleaux de pression (24, 25, 26) et le poinçon de formage (22) effectuent un mouvement axial (21) de manière synchrone.

6. Procédé selon l'une des revendications précédentes, **caractérisé en ce que** le procédé est mis en œuvre sous forme de formage à froid, à mi-chaud ou à chaud.

7. Procédé selon l'une des revendications précédentes, **caractérisé en ce que** la section transversale de la forme creuse (8) est circulaire ou présente un profil d'entraînement tel qu'une ellipse, un polygone ou des profils à plusieurs coins et dentés orientés axialement.

8. Procédé selon l'une des revendications précédentes, **caractérisé en ce qu'**après l'exercice de la pression de forage , dans une autre étape du processus, le formage de la tête de soupape (12) est effectué par extrusion ou forgeage de la tête de soupape (12).
